# FASCICULE DE BREVET EUROPEEN

(11) **EP 2 576 302 B1**
(45) Date de publication et mention de la délivrance du brevet: **27.05.2020**
(21) Numéro de dépôt: 11710520.5
(22) Date de dépôt: 29.03.2011
(51) Int. Cl.: B60T 13/74

(54) **SYSTÈME DE FREINS À SERVOFREIN À VIS À BILLES COAXIALES**
BREMSSYSTEM MIT SERVOUNTERSTÜTZUNG DURCH KUGELGEWINDETRIEB
BRAKE SYSTEM WITH SERVO ASSISTANCE BY COAXIAL BALL SCREW DRIVE

(30) Priorité: 26.05.2010 FR 1002252
(43) Date de publication de la demande: 10.04.2013
(73) Titulaire: Robert Bosch GmbH, 70442 Stuttgart (DE)
(72) Inventeur: RICHARD, Philippe, F-77500 Chelles (FR); CAGNAC, Bastien, F-60500 Chantilly (FR); GAFFE, François, F-44420 La Turballe (FR)
(86) Numéro de dépôt international: PCT/EP2011/054832
(87) Numéro de publication internationale: WO 2011/147609

(56) Documents cités:
- DE-A1- 19 939 950
- DE-A1-102008 038 320
- FR-A1- 2 860 474

## Description

### Domaine de l'invention

La présente invention concerne un système de freins à maître-cylindre et servofrein à vis à bille coaxiale comprenant une tige de poussée transmettant à un maître-cylindre la poussée générée par le servomoteur et/ou celle exercée sur la pédale de frein, le servomoteur comportant une vis à billes dont le stator (vis) pousse la tige de poussée par le rotor (écrou) entrainé par un moteur commandé.

### Etat de la technique

On connaît déjà un système de freins à vis à billes selon le document FR 03 11 580 (N° de publication FR 2 860 474) dont le rotor du moteur électrique entraînant la vis à billes est monté directement sur le rotor de la vis à billes ou comporte un rotor constituant le rotor de la vis à billes. L'autre partie de la vis à billes (le stator) est une couronne logée dans le rotor, qui avance dans celui-ci en poussant le piston d'actionneur entraînant la tige de poussée. Mais ce montage a l'inconvénient d'être relativement encombrant et coûteux à cause du diamètre de la vis à billes entourant le piston d'actionneur et l'extrémité arrière du piston du maître-cylindre.

Il existe également un servofrein à vis à billes coaxiale en série mais celui-ci ne permet pas de fonctionnement de secours par l'intermédiaire du disque de réaction.

### But de l'invention

La présente invention a pour but de développer un système de freins à maître-cylindre et servofrein à vis à billes, coaxiale, permettant d'intégrer avantageusement la commande de frein en cas de défaillance du servofrein et dont l'encombrement soit réduit.

### Exposé et avantages de l'invention

A cet effet, la présente invention concerne un système de freins à maître-cylindre et servofrein à vis à billes, coaxiale, du type défini ci-dessus caractérisé en ce que
- le servofrein comporte un piston d'actionneur entouré par le stator de la vis à billes,
- le piston d'actionneur comprend
   * un manchon logé dans un alésage du stator,
   * une collerette à l'avant du manchon formant
      ** une surface de poussée du stator et
      ** un logement avec un épaulement circulaire constituant la surface d'appui pour le disque de réaction,
      ** un plongeur relié à la tige de commande et logé dans le manchon pour agir en cas de défaillance du servofrein sur le disque de réaction, dont il est normalement séparé par l'intervalle de saut S.

Ainsi, l'invention permet de commander le maître-cylindre soit par le servofrein qui agit sur le disque de réaction soit par la tige de commande et le piston plongeur en cas de défaillance du servofrein et qui agisse également sur le disque de réaction. Cette solution permet également de réduire le diamètre de la vis à billes, ce qui est avantageux à la fois pour l'encombrement de l'ensemble du système de freins et d'autre part, sur le plan de la fabrication et du coût de la vis à billes.

Suivant une autre caractéristique avantageuse, le piston plongeur comporte un poussoir dont l'extrémité s'appuie sur une pièce intermédiaire séparée du dos du disque de réaction par l'intervalle de saut S et une coupelle à épaulement recevant le disque de réaction et formant un logement auxiliaire pour la pièce intermédiaire mobile par rapport au dos du disque de réaction, le logement assurant le saut S souhaité entre le disque de réaction et la pièce intermédiaire,
le logement étant ouvert pour le passage du poussoir appuyé contre la pièce intermédiaire.

Suivant une autre caractéristique avantageuse, la surface d'appui du stator sur la collerette et la surface d'appui du disque de réaction sur l'épaulement de la collerette du piston d'actionneur se chevauchent radialement.

Grâce à ce chevauchement des surfaces d'appui sur la collerette, le piston d'actionneur peut être réalisé de façon avantageuse tant du point de vus industriel qu'économique par une pièce en matière plastique, puisqu'elle n'aura à transmettre les efforts de compression que sur une épaisseur de matière très réduite.

Suivant une autre caractéristique avantageuse, le boîtier du servofrein est formé d'une partie avant et d'une partie arrière, chacune ayant la forme d'un cylindre avec un fond,
- les cylindres des deux parties étant emmanchés partiellement l'un dans l'autre,
- la partie avant a un fond percé, bordé par un retour formant un palier pour être emmanché sur une surface cylindrique réalisée à l'arrière du corps du maître-cylindre,
- la partie arrière reçoit la vis à billes avec le piston d'actionneur, le plongeur, le poussoir, la pièce intermédiaire et le disque de réaction ainsi que la tige de poussée,
- la partie avant ayant une bride d'assemblage pour le maître-cylindre et pour la partie arrière,
- la partie arrière ayant une bride d'assemblage pour la partie avant ainsi que des moyens d'assemblage au tablier séparant l'enceinte moteur et l'habitacle du véhicule.

Cette réalisation du boîtier du servofrein est particulièrement intéressante pour l'assemblage et les éventuelles interventions car les composants principaux du servofrein sont répartis entre les deux parties du boîtier et peuvent être installés séparément, les deux ensembles ainsi réalisés étant ensuite assemblés mécaniquement par simple engagement et blocage par les moyens d'assemblage tels que des tirants servant par ailleurs à la fixation du système de freins au tablier du véhicule.

Suivant une autre caractéristique, le rotor de la vis à billes est monté dans la partie arrière du boîtier par l'intermédiaire d'un roulement à rouleaux croisés, appuyé dans le sens de l'axe XX contre un épaulement formé par un manchon de la partie arrière et bloqué à l'avant par un anneau élastique accroché dans une rainure.

Cette réalisation du rotor de la vis à billes et de son montage dans un palier à roulement croisé offre une simplification complémentaire de l'installation puisqu'un seul roulement reçoit le rotor de la vis à bille. Cela permet également de dégager l'accès à la vis à billes pour son entraînement par différents moyens de transmission.

Suivant une autre caractéristique avantageuse, le piston plongeur a une collerette arrière de diamètre supérieur à celui de l'ouverture du manchon de la partie arrière du boîtier pour constituer une butée, la collerette ayant un diamètre au plus égal à celui de l'alésage du stator pour pouvoir y coulisser.

Suivant une autre caractéristique avantageuse, le plongeur a une collerette avant pour être retenu par un épaulement intérieur du manchon.

Cette forme de réalisation du plongeur est avantageuse car elle permet de combiner simplement plusieurs fonctions du piston plongeur.

Suivant une autre caractéristique avantageuse et en complément de celle développée ci-dessus, la partie arrière est emmanchée sur la partie avant en venant en butée contre la bride de la partie avant et l'assemblage est réalisé par des tirants,
la collerette du piston d'actionneur a un diamètre inférieur à celui de la partie avant et
un ressort hélicoïdal de rappel est comprimé entre le retour de la partie avant et le bord de la collerette.

Suivant une autre caractéristique avantageuse, la forme cylindrique de la partie arrière présente une surface intérieure conique, près de son ouverture, pour s'engager sur la surface cylindrique de la partie avant.

Cette forme de la surface intérieure de la partie arrière du boîtier du servofrein facilite l'assemblage des deux sous-ensembles constituant le servofrein.

### Dessins

La présente invention sera décrite ci-après de manière plus détaillée à l'aide d'un exemple de réalisation d'un système de freins, représenté dans les dessins annexés dans lesquels :
- la figure 1 est une coupe axiale du système de freins à maître-cylindre tandem et servofrein à vis à billes,
- la figure 2 est une vue en coupe correspondant à la figure 1 sans le piston d'actionneur,
- la figure 2B est une vue en coupe du piston d'actionneur,
- la figure 3 est une vue en coupe du piston d'actionneur du servofrein.

### Description d'un mode de réalisation de l'invention

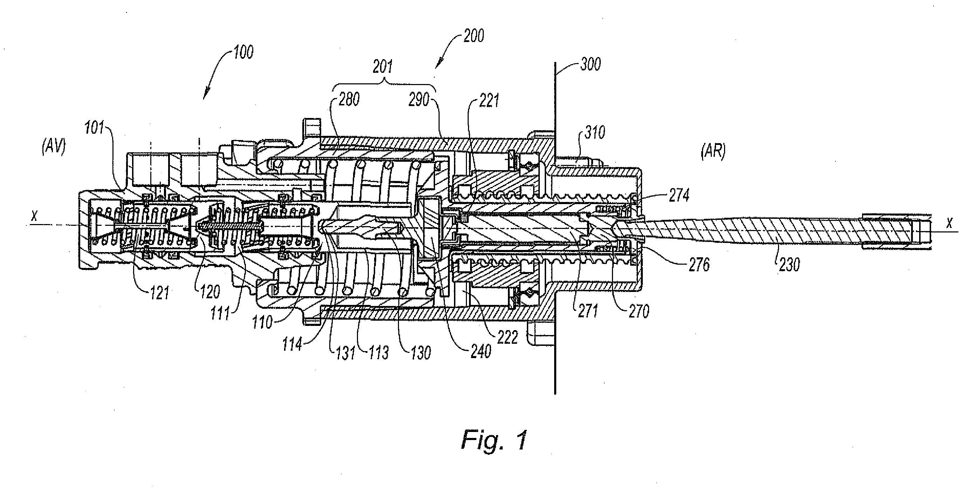

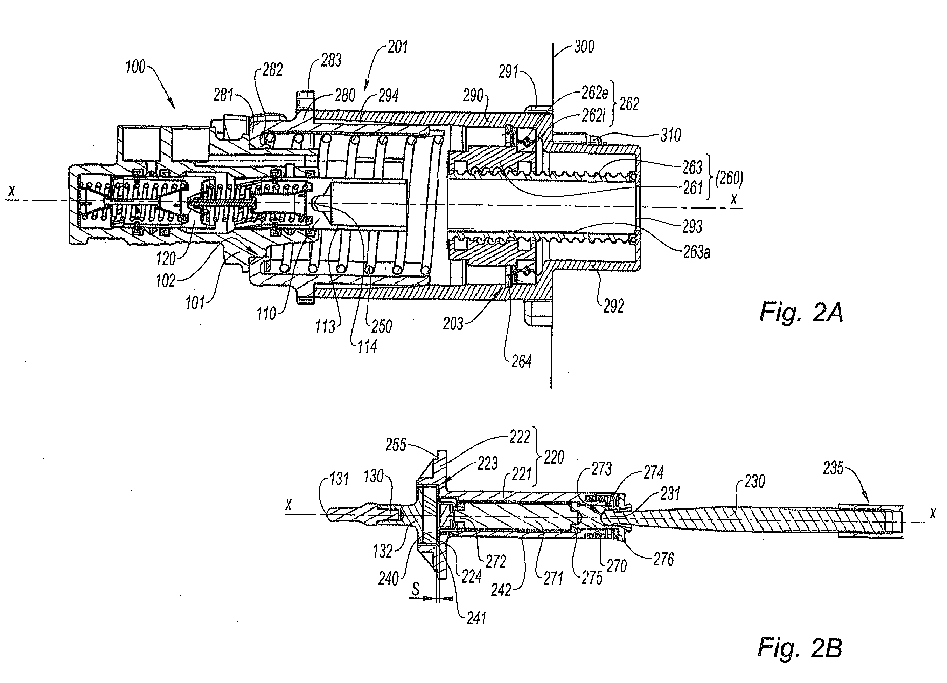

Selon les figures 1, 2A, 2B, l'invention concerne système de freins à maître-cylindre 100 et servofrein à vis à billes 200. Dans le présent exemple, le maître-cylindre est un maître-cylindre tandem 100 équipé du servofrein électrique 200 selon un montage coaxial d'axe XX. L'ensemble (100, 200) ainsi formé est fixé au tablier 300 du véhicule séparant l'enceinte moteur et l'habitacle.

L'orientation utilisée dans la présente description est l'orientation habituelle d'un maître-cylindre tandem 100 et de son servofrein 200, le maître-cylindre étant situé à gauche (à l'avant AV) et le servofrein à droite (à l'arrière AR), du côté de la tige de commande 230 et de la pédale de frein.

Le maître-cylindre tandem 100 a une structure connue représentée de façon détaillée mais dont la description est simplifiée. Son boîtier 101 comporte un piston primaire 110 et un piston secondaire 120 définissant une chambre primaire 111 et une chambre secondaire 121 reliées chacune respectivement à un circuit de frein. Le piston primaire 110 comporte un prolongement 113 ouvert à l'arrière, et un logement axial 114 pour recevoir la tête 131 de la tige de poussée 130 actionnée par le servofrein 200 ou par la tige de commande 230 en cas de panne du servofrein.

En position de repos du maître-cylindre tandem 100, le prolongement 113 du piston primaire 110 vient en saillie dans la chambre du servofrein.

Le servofrein 200 se compose d'un piston d'actionneur 220 relié à une vis à billes 260 agissant sur le piston d'actionneur 220 qui lui-même pousse la tige de poussée 130 et reçoit le piston plongeur 270 actionné par la tige de commande 230 reliée à la pédale de frein.

De façon plus détaillée :
Selon la figure 2A, le servofrein se compose de la vis à billes 260 dont le rotor 261 (écrou) entrainé en rotation autour de l'axe XX directement ou indirectement par un moteur électrique non représenté, est libre en rotation mais solidaire en translation dans le corps 201 du servofrein par l'intermédiaire d'un palier à roulement 262. Le palier à roulement 262 est retenu dans le boîtier 201 par un anneau élastique 264 accroché dans une rainure 203 de la paroi du boîtier. Le rotor 261 est entraîné en rotation par le moteur électrique, par l'intermédiaire d'une transmission à pignons ou à courroie.

Le stator 263 (ou vis proprement dite) est un cylindre creux dont l'alésage 263a reçoit le piston d'actionneur 220 et le pousse dans le sens de l'actionnement du maître-cylindre tandem 100 en le laissant libre d'avancer par rapport à lui ou de coulisser vers le maître-cylindre en cas de défaillance d'un système de commande ou de transmission. Les billes de la vis à billes 260 ne sont pas représentées et le principe de fonctionnement connu, d'une vis à billes ne sera pas décrit de façon détaillée.

La rotation du rotor 261 dans un sens fait avancer le stator 263 et dans l'autre sens, la rotation le fait reculer.

Le rotor 261 a le nombre de spires nécessaire à la transmission de la poussée d'assistance au stator 263 qui a la longueur nécessaire à la course d'actionnement du piston 110 du maître-cylindre 100.

Le boîtier 201 du servofrein 200 se compose de deux parties, une partie avant 280 et une partie arrière 290 emmanchées l'une sur l'autre avec leurs composants et assemblées par des tirants 310 portant les moyens d'assemblage du maître-cylindre tandem au servofrein.

La forme cylindrique de la partie arrière 290 ou une surface intérieure conique 294 pour s'engager sur la partie avant 280.

La partie avant 280 comporte un retour 281 formant un appui pour venir sur l'arrière 102 du boîtier 101 du maître-cylindre 100. Le retour 281 forme également une gorge 282 recevant l'extrémité du ressort de rappel 250.

La partie arrière 290 se termine par un manchon 292 de diamètre réduit pour entourer le stator 263 dans sa position neutre, c'est-à-dire lorsque le stator est reculé par translation dans sa position arrière extrême en venant d'ailleurs en butée éventuellement contre le fond du manchon 292 dont l'ouverture 293 a un diamètre inférieur à celui du stator 263.

L'organisation du servofrein en deux parties facilite le montage du maître-cylindre tandem à servofrein :
- la partie avant 280, muni d'une bride 283, s'attache au maître-cylindre tandem 100 et reçoit le ressort de rappel 250 ;
- la partie arrière 290, munie d'une bride 291, reçoit la vis à billes 260 et son moyen d'entraînement ainsi que le piston plongeur 270, le disque de réaction 240 et la tige de poussée 130.

Ensuite on assemble les deux parties 280, 290 du boîtier par les tirants 310.

Le palier à roulement 262 est avantageusement un roulement à rouleaux croisés, bloquant la translation du rotor (écrou) 261 par la structure des chemins des rouleaux en forme de V. La bague extérieure 262e est bloquée contre l'épaulement du boîtier 201 (290) par l'anneau élastique 264 et la bague intérieure 262i est montée sur l'écrou 261 de la vis à billes 260.

Selon la figure 2B, le piston d'actionneur 220 se compose d'un manchon axial 221 terminé à l'avant par une collerette 222 avec un appui 225 contre lequel vient le ressort de rappel 250 par ailleurs appuyé contre le boîtier 201.

Dans sa face avant, la collerette 222 comporte un logement 223 communiquant avec l'intérieur du manchon 221 et formant un épaulement 224 recevant le disque de réaction 240.

La tige de poussée 130 se termine à l'arrière par une partie évasée 132 en forme de champignon s'appuyant sur la face avant du disque de réaction 240. Le disque de réaction 240 est tenu dans une coupelle à épaulement 241, en tôle, épousant la forme du logement 223 du piston d'actionneur 220 et se prolongeant par un logement auxiliaire 226 dans l'ouverture du manchon 221 pour recevoir une pièce intermédiaire 242 rigide, en forme de disque, écartée du dos du disque de réaction 240 d'un intervalle de consigne correspondant au saut (S) d'un servofrein. La tige de commande 230 agit sur le disque de réaction 240 par l'intermédiaire d'un piston plongeur 270 combiné à un poussoir 271. La tête 272 du poussoir 271 s'appuie contre la pièce intermédiaire 242 en passant par l'ouverture arrière de la coupelle étagée 241.

L'extrémité arrière du manchon 221 est dédoublée pour former un logement 227 recevant le ressort 274 repoussant le piston plongeur 270 contre la butée 228 formée à l'extrémité arrière du manchon 221.

Ce ressort de rappel 274 s'appuie sur une collerette arrière 276 du piston plongeur 270 et lui permet de se déplacer initialement sous l'effet de la poussée exercée sur la tige de commande 230 pour déclencher le servofrein avant que la tête 272 du poussoir 271 prolongeant le piston plongeur 270 ne touche la face arrière du disque de réaction 240 par le déplacement de la pièce intermédiaire 242.

A l'arrière, l'intérieur du manchon 221 forme un épaulement 228 pour retenir le piston plongeur 270 lui-même muni d'une collerette avant 275.

L'extrémité arrière du piston plongeur 270 a un logement 273 en forme de coupelle sphérique recevant la tête arrondie 231 de la tige de commande 230.

La tige de commande 230 coopère avec un capteur de déplacement 235 qui génère un signal détectant le mouvement de la tige de commande 230 avancée par la poussée de la pédale de frein. Ce signal est transmis à un circuit de commande agissant sur le moteur du servofrein pour entraîner la vis à billes 260 et le piston d'actionneur 220.

En fonctionnement normal, hors défaillance du servofrein, la détection du mouvement de la tige de commande 230 met en œuvre le servofrein dont la vis 263 pousse sur la collerette 222 par l'intermédiaire d'une rondelle rigide 265. La collerette 222 entraîne ainsi la tige de poussée 130 et le piston primaire 110. Pendant ce mouvement, le piston plongeur 270 n'agit pas sur le disque de réaction 240 par le poussoir 271 et la pièce intermédiaire 242 car l'écartement correspondant au saut (S) est maintenu entre la pièce intermédiaire 242 et le dos du disque de réaction 240 par l'action du servofrein. Ce n'est qu'en cas de défaillance du servofrein que la poussée de la tige de commande 230 est transmise directement au disque de réaction 240 par le piston plongeur 270, le poussoir 271 et la pièce intermédiaire, rigide 242. Ce dernier fonctionne comme un démultiplicateur d'effort puisqu'il s'agit d'une pièce élastique, déformable mais de volume constant.

Ainsi, dans ce montage selon l'invention, le disque de réaction 240 joue le rôle d'intermédiaire avec le piston primaire 110 puisqu'il transmet à la fois l'action du servofrein en fonctionnement normal et l'action de la tige de commande 230 en fonctionnement de secours lorsque le servofrein est défaillant.

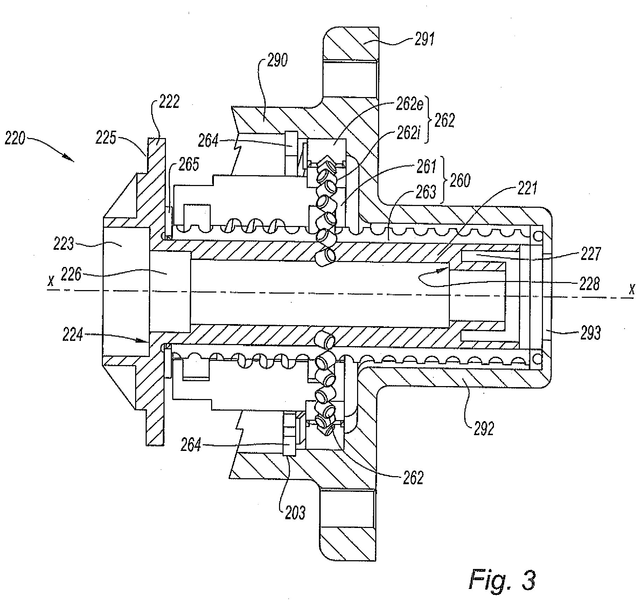

La figure 3 est une vue à échelle agrandie, partielle de la partie arrière 290 et des composants qu'elle reçoit. La partie arrière 290 comporte une bride 291 pour la fixation des tirants. Le fond de la partie arrière 290 se termine par le manchon 292 qui sert de dégagement au manchon 221 et au stator 263 de la vis à billes 260.

Cette figure met en évidence la forme du piston d'actionneur 220 avec son manchon 221, sa collerette 222, le logement 223 pour le disque de réaction s'appuyant sur l'épaulement 224 ainsi que le logement auxiliaire 226 pour recevoir la pièce intermédiaire et l'épaulement intérieur 228.

La figure 3 montre également la surface d'appui du stator 263 contre l'arrière de la collerette 262 par l'intermédiaire de la rondelle rigide 265 qui chevauche, dans la direction radiale (ou direction diamétrale), la surface de l'épaulement 224 par lequel le piston d'actionneur 220 s'appuie sur le disque de réaction 240. Cela permet de réaliser le piston 220 en une matière plastique et non en métal.

La présente invention concerne de préférence des applications dans l'industrie des freins de véhicules automobiles.

### NOMENCLATURE

- 100: maître-cylindre tandem
- 101: corps du maître-cylindre tandem
- 102: arrière du corps
- 110: piston primaire
- 111: chambre du piston primaire
- 113: prolongement du piston primaire
- 114: logement
- 120: piston secondaire
- 121: chambre du piston secondaire
- 130: tige de poussée
- 131: tête de la tige de poussée
- 200: servofrein électrique
- 201: boîtier du servofrein
- 202: anneau élastique
- 203: rainure
- 220: piston d'actionneur
- 221: manchon
- 222: collerette
- 223: logement
- 224: épaulement
- 225: appui du ressort
- 226: logement auxiliaire
- 227: logement à ressort
- 228: butée
- 229: épaulement
- 230: tige de commande
- 231: tête de la tige de commande
- 235: capteur de déplacement
- 240: disque de réaction
- 241: coupelle
- 242: pièce intermédiaire
- 250: ressort de rappel
- 260: vis à billes
- 261: rotor/écrou
- 262: palier à roulement
- 262i: logement intérieur
- 262e: logement extérieur
- 263: stator/vis
- 263a: alésage du stator
- 264: anneau élastique
- 265: rondelle rigide
- 270: piston plongeur
- 271: poussoir
- 272: tête du poussoir
- 273: logement
- 274: ressort de rappel
- 275: collerette avant
- 276: collerette arrière
- 280: partie avant
- 281: retour
- 282: gorge
- 283: bride d'assemblage
- 284: bord de l'ouverture de la partie avant
- 290: partie arrière
- 291: bride
- 292: manchon
- 293: ouverture du fond du manchon 292
- 294: surface intérieure conique
- 300: tablier
- 310: tirants
- C1, C2: circuits de freins
- S: saut

## Revendications

1. Système de freins à maître-cylindre et servofrein à vis à billes coaxial comprenant
- une tige de poussée transmettant à un maître-cylindre la poussée générée par le servomoteur et/ou celle exercée sur la pédale de frein,
- le servomoteur comportant une vis à billes dont le stator (vis) pousse la tige de poussée par le rotor (écrou) entrainé par un moteur commandé, et
- le servofrein comportant un piston d'actionneur (220) entouré par le stator (263) de la vis à billes (260), et
- un plongeur (270) relié à la tige de commande (230) et logé dans le manchon (221) pour agir en cas de défaillance du servofrein sur le disque de réaction (240), dont il est normalement séparé par l'intervalle de saut (S),
- le piston d'actionneur (220) comprend
* une collerette (222) à l'avant du manchon (221) formant
** une surface de poussée du stator (263) et
** un logement (223) avec un épaulement circulaire (224) constituant la surface d'appui pour le disque de réaction (240).
le piston d'actionneur (220) a un manchon (221) logé dans un alésage (263a) du stator (263),
**caractérisé en ce que**
la surface d'appui du stator (263) sur la collerette (222) et la surface d'appui du disque de réaction (240) sur l'épaulement (224) de la collerette (222) du piston d'actionneur (220) se chevauchent radialement.

2. Système de freins selon la revendication 1,
**caractérisé en ce que**
le piston plongeur (270) comporte un poussoir (271) dont l'extrémité s'appuie sur une pièce intermédiaire (242) séparée du dos du disque de réaction (240) par l'intervalle de saut (S) et une coupelle à épaulement (241) recevant le disque de réaction (240) et formant un logement auxiliaire (226) pour la pièce intermédiaire (242) mobile par rapport au dos du disque de réaction (240), le logement (226) assurant le saut (S) souhaité entre le disque de réaction (240) et la pièce intermédiaire (242),
le logement (226) étant ouvert pour le passage du poussoir (271) appuyé contre la pièce intermédiaire (242).

3. Système de freins selon la revendication 1,
**caractérisé en ce que**
le boîtier (201) du servofrein est formé d'une partie avant (280) et d'une partie arrière (290), chacune ayant la forme d'un cylindre avec un fond,
- les cylindres des deux parties (280, 290) étant emmanchés partiellement l'un dans l'autre,
- la partie avant (280) a un fond percé, bordé par un retour (281) formant un palier pour être emmanché sur une surface cylindrique (102) réalisée à l'arrière du corps (101) du maître-cylindre,
- la partie arrière (290) reçoit la vis à billes (260) avec le piston d'actionneur (220), le plongeur (270), le poussoir (271), la pièce intermédiaire (242) et le disque de réaction (240) ainsi que la tige de poussée (130),
- la partie avant (280) ayant une bride d'assemblage (283) pour le maître-cylindre (100) et pour la partie arrière (290),
- la partie arrière (290) ayant une bride d'assemblage (291) pour la partie avant (280) ainsi que des moyens d'assemblage au tablier séparant l'enceinte moteur et l'habitacle du véhicule.

4. Système de freins selon la revendication 1,
**caractérisé en ce que**
le rotor (261) de la vis à billes (260) est monté dans la partie arrière (290) du boîtier (201) par l'intermédiaire d'un roulement à rouleaux croisés (262), appuyé dans le sens de l'axe (XX) contre un épaulement formé par un manchon (292) de la partie arrière (290) et bloqué à l'avant par un anneau élastique (264) accroché dans une rainure (203).

5. Système de freins selon la revendication 1,
**caractérisé en ce que**
le piston plongeur (270) a une collerette arrière (276) de diamètre supérieur à celui de l'ouverture (293) du manchon (292) de la partie arrière (290) du boîtier (201) pour constituer une butée, la collerette (276) ayant un diamètre au plus égal à celui de l'alésage (263a) du stator (263) pour pouvoir y coulisser.

6. Système de freins selon la revendication 1,
**caractérisé en ce que**
le plongeur (270) a une collerette avant (275) pour être retenu par un épaulement (228) intérieur du manchon (221).

7. Système de freins selon la revendication 3,
**caractérisé en ce que**
la partie arrière (290) est emmanchée sur la partie avant en venant en butée contre la bride de la partie avant (280) et l'assemblage est réalisé par des tirants,
la collerette (222) du piston d'actionneur (220) a un diamètre inférieur à celui de la partie avant (280) et
un ressort hélicoïdal de rappel (250) est comprimé entre le retour (281) de la partie avant (280) et le bord (225) de la collerette (222).

8. Système de freins selon la revendication 3,
**caractérisé en ce que**
la forme cylindrique de la partie arrière (290) présente une surface intérieure conique (294), près de son ouverture, pour s'engager sur la surface cylindrique de la partie avant (280).

## Patentansprüche

1. Bremssystem mit Hauptbremszylinder und koaxialem Bremskraftverstärker mit Kugelgewindetrieb, welches umfasst:
- eine Stößelstange, die auf einen Hauptbremszylinder den Schub, der von dem Stellantrieb erzeugt wird, und/oder den, der auf das Bremspedal ausgeübt wird, überträgt,
- wobei der Stellantrieb einen Kugelgewindetrieb aufweist, dessen Stator (Schraube) über den Rotor (Mutter), der durch einen gesteuerten Motor angetrieben wird, die Stößelstange schiebt, und
- wobei der Bremskraftverstärker einen Aktuatorkolben (220) aufweist, der von dem Stator (263) des Kugelgewindetriebs (260) umgeben ist, und
- einen Plunger (270), der mit der Stößelstange (230) verbunden ist und in der Hülse (221) aufgenommen ist, um im Falle eines Ausfalls des Bremskraftverstärkers auf die Reaktionsscheibe (240) zu wirken, von der er normalerweise durch das Sprung-Intervall (S) getrennt ist,
- wobei der Aktuatorkolben (220) umfasst:
* einen Kragen (222) vorn an der Hülse (221), welcher bildet:
** eine Stützfläche des Stators (263) und
** eine Aufnahme (223) mit einem kreisförmigen Absatz (224), welcher die Anlagefläche für die Reaktionsscheibe (240) darstellt,
wobei der Aktuatorkolben (220) eine Hülse (221) aufweist, die in einer Bohrung (263a) des Stators (263) aufgenommen ist,
**dadurch gekennzeichnet, dass**
die Anlagefläche des Stators (263) an dem Kragen (222) und die Anlagefläche der Reaktionsscheibe (240) an dem Absatz (224) des Kragens (222) des Aktuatorkolbens (220) sich radial überlappen.

2. Bremssystem nach Anspruch 1,
**dadurch gekennzeichnet, dass**
der Plungerkolben (270) einen Schieber (271) aufweist, dessen Ende sich an einem Zwischenstück (242) abstützt, das von der Rückseite der Reaktionsscheibe (240) durch das Sprung-Intervall (S) getrennt ist, und eine mit einem Absatz versehene Schale (241), welche die Reaktionsscheibe (240) aufnimmt und eine Hilfsaufnahme (226) für das Zwischenstück (242) bildet, die in Bezug auf die Rückseite der Reaktionsscheibe (240) beweglich ist, wobei die Aufnahme (226) den gewünschten Sprung (S) zwischen der Reaktionsscheibe (240) und dem Zwischenstück (242) sicherstellt,
wobei die Aufnahme (226) für die Hindurchbewegung des Schiebers (271), der gegen das Zwischenstück (242) gedrückt wird, offen ist.

3. Bremssystem nach Anspruch 1,
**dadurch gekennzeichnet, dass**
das Gehäuse (201) des Bremskraftverstärkers von einem vorderen Teil (280) und einem hinteren Teil (290) gebildet wird, die jeweils die Form eines Zylinders mit einem Boden haben,
- wobei die Zylinder der zwei Teile (280, 290) teilweise ineinandergeschoben sind,
- der vordere Teil (280) einen gelochten Boden aufweist, der von einem Umschlag (281) eingefasst wird, der ein Lager bildet, um auf eine zylindrische Fläche (102) aufgeschoben zu werden, die hinten am Körper (101) des Hauptbremszylinders ausgebildet ist,
- der hintere Teil (290) den Kugelgewindetrieb (260) mit dem Aktuatorkolben (220), den Plunger (270), den Schieber (271), das Zwischenstück (242) und die Reaktionsscheibe (240) sowie die Stößelstange (130) aufnimmt,
- wobei der vordere Teil (280) einen Montageflansch (283) für den Hauptbremszylinder (100) und für den hinteren Teil (290) aufweist,
- wobei der hintere Teil (290) einen Montageflansch (291) für den vorderen Teil (280) sowie Mittel zur Montage an der Spritzwand, die den Motorraum und den Innenraum des Fahrzeugs trennt, aufweist.

4. Bremssystem nach Anspruch 1,
**dadurch gekennzeichnet, dass**
der Rotor (261) des Kugelgewindetriebes (260) im hinteren Teil (290) des Gehäuses (201) über ein Kreuzrollenlager (262) angebracht ist, das in der Richtung der Achse (XX) gegen einen Absatz gedrückt wird, der von einer Hülse (292) des hinteren Teils (290) gebildet wird, und das vorn durch einen elastischen Ring (264) blockiert wird, der in eine Nut (203) eingreift.

5. Bremssystem nach Anspruch 1,
**dadurch gekennzeichnet, dass**
der Plungerkolben (270) einen hinteren Kragen (276) mit einem Durchmesser aufweist, der größer als derjenige der Öffnung (293) der Hülse (292) des hinteren Teils (290) des Gehäuses (201) ist, um einen Anschlag zu bilden, wobei der Kragen (276) einen Durchmesser aufweist, der höchstens gleich demjenigen der Bohrung (263a) des Stators (263) ist, um in dieser gleiten zu können.

6. Bremssystem nach Anspruch 1,
**dadurch gekennzeichnet, dass**
der Plunger (270) einen vorderen Kragen (275) aufweist, um von einem inneren Absatz (228) de Hülse (221) gehalten zu werden.

7. Bremssystem nach Anspruch 3,
**dadurch gekennzeichnet, dass**
der hintere Teil (290) auf den vorderen Teil aufgeschoben ist, wobei er am Flansch des vorderen Teils (280) zur Anlage kommt und der Zusammenbau durch Zugbolzen erfolgt,
der Kragen (222) des Aktuatorkolbens (220) einen Durchmesser aufweist, der kleiner als derjenige des vorderen Teils (280) ist, und
eine Rückhol-Schraubenfeder (250) zwischen dem Umschlag (281) des vorderen Teils (280) und dem Rand (225) des Kragens (222) zusammengedrückt wird.

8. Bremssystem nach Anspruch 3,
**dadurch gekennzeichnet, dass**
die zylindrische Form des hinteren Teils (290) in der Nähe ihrer Öffnung eine konische Innenfläche (294) aufweist, um auf der zylindrischen Fläche des vorderen Teils (280) in Eingriff zu gelangen.

## Claims

1. Brake system with master cylinder and brake servounit with coaxial ball screw comprising
- a thrust rod transmitting to a master cylinder the thrust generated by the brake booster and/or that exerted on the brake pedal,
- the brake booster comprising a ball screw whose stator (screw) thrusts the thrust rod by the rotor (nut) driven by a control motor, and
- the brake servounit comprising an actuator piston (220) surrounded by the stator (263) of the ball screw (260), and
- a plunger (270) linked to the control rod (230) and housed in the sleeve (221) to act in case of failure of the brake servounit on the reaction disk (240), from which it is normally separated by the jump gap (S),
- the actuator piston (220) comprises
* a collar (222) at the front of the sleeve (221) forming
** a thrust surface of the stator (263) and
** a recess (223) with a circular shoulder (224) constituting the bearing surface for the reaction disk (240),
the actuator piston (220) has a sleeve (221) housed in a bore (263a) of the stator (263),
**characterized in that**
the bearing surface of the stator (263) on the collar (222) and the bearing surface of the reaction disk (240) on the shoulder (224) of the flange (222) of the actuator piston (220) overlap radially.

2. Brake system according to Claim 1,
**characterized in that**
the plunger piston (270) comprises a thruster (271) whose end bears on an intermediate part (242) separated from the back of the reaction disk (240) by the jump gap (S) and a shoulder cup (241) receiving the reaction disk (240) and forming an auxiliary recess (226) for the intermediate part (242) that is mobile relative to the back of the reaction disk (240), the recess (226) ensuring the desired jump (S) between the reaction disk (240) and the intermediate part (242),
the recess (226) being open for the passage of the thruster (221) pressed against the intermediate part (242).

3. Brake system according to Claim 1,
**characterized in that**
the housing (201) of the brake servounit is formed by a front part (280) and a rear part (290), each having the form of a cylinder with a bottom,
- the cylinders of the two parts (280, 290) being partially fitted in one another,
- the front part (280) has a pierced bottom, bordered by a return (281) forming a bearing to be fitted onto a cylindrical surface (102) produced at the rear of the body (101) of the master cylinder,
- the rear part (290) receives the ball screw (260) with the actuator piston (220), the plunger (270), the thruster (271), the intermediate part (242) and the reaction disk (240) as well as the thrust rod (130),
- the front part (280) having an assembly flange (283) for the master cylinder (100) and for the rear part (290),
- the rear part (290) having an assembly flange (291) for the front part (280) and means for assembly with the fire wall separating the engine compartment from the interior of the vehicle.

4. Brake system according to Claim 1,
**characterized in that**
the rotor (261) of the ball screw (260) is mounted in the rear part (290) of the housing (201) via a crossed roller bearing (262), pressed in the direction of the axis (XX) against a shoulder formed by a sleeve (292) of the rear part (290) and blocked at the front by an elastic ring (264) caught in a groove (203).

5. Brake system according to Claim 1,
**characterized in that**
the plunger piston (270) has a rear collar (276) of a diameter greater than that of the aperture (293) of the sleeve (292) of the rear part (290) of the housing (201) to constitute an abutment, the collar (276) having a diameter at most equal to that of the bore (263a) of the stator (263) to be able to slide therein.

6. Brake system according to Claim 1,
**characterized in that**
the plunger (271) has a front collar (275) to be retained by an internal shoulder (228) of the sleeve (221) .

7. Brake system according to Claim 3,
**characterized in that**
the rear part (290) is fitted onto the front part by coming into abutment against the flange of the front part (280) and the assembly is made by tie rods,
the collar (222) of the actuator piston (220) has a diameter less than that of the front part (280) and
a helical return spring (250) is compressed between the return (281) of the front part (280) and the edge (225) of the collar (222).

8. Brake system according to Claim 3,
**characterized in that**
the cylindrical form of the rear part (290) has a tapered internal surface (294), close to the aperture thereof, to be engaged on the cylindrical surface of the front part (280).
